# EUROPÄISCHE PATENTSCHRIFT

(11) **EP 1 051 702 B1**
(45) Veröffentlichungstag und Bekanntmachung des Hinweises auf die Patenterteilung: **08.05.2002**
(21) Anmeldenummer: 99908743.0
(22) Anmeldetag: 20.01.1999
(51) Int. Cl.: G10L 15/06

(54) **VERFAHREN UND EINRICHTUNG ZUM TRAINIEREN EINES SPRACHERKENNUNGSSYSTEMS**
METHOD AND DEVICE FOR ENHANCING RECOGNITION PROBABILITY IN VOICE RECOGNITION SYSTEMS
PROCEDE ET DISPOSITIF POUR AUGMENTER LA PROBABILITE DE RECONNAISSANCE DANS DES SYSTEMES DE RECONNAISSANCE VOCALE

(30) Priorität: 03.02.1998 DE 19804047
(43) Veröffentlichungstag der Anmeldung: 15.11.2000
(73) Patentinhaber: DeTeMobil Deutsche Telekom MobilNet GmbH, 53227 Bonn (DE); Deutsche Telekom AG, 53113 Bonn (DE)
(72) Erfinder: KAUSCHKE, Ulrich, D-58642 Iserlohn (DE); RAST, Herbert, Roland, D-53127 Bonn (DE); RUNGE, Fred, D-15838 Wünsdorf (DE)
(74) Vertreter: Riebling, Peter, Dr.-Ing.
(86) Internationale Anmeldenummer: DE9900137
(87) Internationale Veröffentlichungsnummer: WO9940570

(56) Entgegenhaltungen:
- EP-A- 0 241 163
- EP-A- 0 680 035
- DE-A- 4 002 336
- US-A- 4 672 668
- US-A- 5 617 486
- "ADDWORD THROUGH CORRECTION OF RECOGNITION ERRORS" IBM TECHNICAL DISCLOSURE BULLETIN, Bd. 35, Nr. 1A, 1. Juni 1992, Seiten 226-227, XP000308844
- DVORAK S ET AL: "NOISE-ROBUST SPEECH RECOGNITION AND CODING IN CAR ENVIRONMENT" PROCEEDINGS OF THE INTERNATIONAL SYMPOSIUM ON AUTOMOTIVE TECHNOLOGY AND AUTOMATION (ISATA), FLORENCE, MAY 20 - 24, 1991, Nr. SYMP. 24, 20. Mai 1991, Seiten 203-210, XP000308613 NUCLEARE E DELLE ENERGIE ALTERNATIVE (ENEA)

## Beschreibung

Die Erfindung betrifft ein Verfahren zur Erhöhung der Erkennungswahrscheinlichkeit von Spracherkennungssystemen gemäß dem Oberbegriff des Patentanspruchs 1.

Spracherkennungssysteme werden heute vor allem in Computern, Kommunikationssystemen und anderen technischen Geräten eingesetzt, wo es auf leichte Bedienbarkeit oder schnelle Dateneingabe ankommt. Die bisher bekannten Systeme sind jedoch nicht ausgereift und arbeiten fehlerhaft, insbesondere wenn sie in akustisch gestörten Umgebungen betrieben werden. Ein zu erkennendes Wort wird dann oft falsch oder gar nicht erkannt. Dies erfordert vom Benutzer ein mehrfaches Wiederholen des zu erkennenden Wortes, was bei einem häufigen Auftreten eines Erkennungsfehlers zu unzumutbaren Verzögerungen führt.

Die US-A-5,617,468 offenbart ein Verfahren zur Erhöhung der Erkennungswahrscheinlichkeit von Spracherkennungssystemen, bei dem nach Eingabe eines zu erkennenden Begriffs ein Nachtrainieren des gleichlautenden, bereits abgespeicherten Begriffs anhand des eingegebenen Begriffs erfolgt. Dieses Verfahren lässt in akustisch wechselnden Umgebungen keine sichere Spracherkennung zu.

Die EP-A-0 241 163 betrifft ein Spracherkennungsverfahren, das den Benutzer darauf hinweist, wenn ein zu erkennender Begriff bereits in ähnlicher Form im Spracherkennungssystem. gespeichert ist und es zu Verwechslungen zwischen den beiden Begriffen kommen kann. Ein sicheres Erkennen von Begriffen in wechselnden akustischen Umgebungen bietet auch dieses Verfahren nicht.

Der vorliegenden Erfindung liegt deshalb die Aufgabe zugrunde, ein Verfahren zur Spracherkennung vorzuschlagen, das in benutzerfreundlicher Weise die sprecherabhängige Erkennungswahrscheinlichkeit, insbesondere in akustisch gestörten Umgebungen, erhöht.

Diese Aufgabe wird durch die kennzeichnenden Merkmale des Patentanspruchs 1 gelöst.

Vorteilhafte Abwandlungen und Weiterbildungen der Erfindung sind Gegenstand der abhängigen Patentansprüche.

Erfindungsgemäß wird für Spracherkennungssysteme ein Nachtrainieren der Sprachmuster neu eingegebener, möglicherweise falsch erkannter oder gar nicht erkannter Begriffe vorgeschlagen. Nachtrainieren bedeutet, daß ein falsch oder nicht erkannter Begriff nach wiederholter Eingabe nicht einfach überschrieben wird, sondern mit den zuvor eingegebenen Begriffen verglichen und korreliert bzw. durch ein neues Muster ergänzt wird, um so für die Erkennung des Begriffs unwichtige Muster oder Nebengeräusche zu reduzieren oder auszublenden. Die Erfindung ist insbesondere für den Einsatz in Spracherkennungssystemen gedacht, die in akustisch gestörten Umgebung arbeiten, z.B. in Mobilfunkendgeräten, Telefonen etc.

Bei erfolgreicher Erkennung eines bereits als Sprachmuster abgelegten Begriffs wird das abgelegte Sprachmuster mit dem neu aufgezeichneten nachtrainiert. Diese Nachtrainieren erfolgt bei erfolgreicher Erkennung eines jeden bereits aufgezeichneten Begriffs n-mal, wobei die Zahl der Durchläufe frei einstellbar und jederzeit veränderbar ist. Durch dieses Nachtrainieren wird eine stetige Verringerung des Einflusses von variablen Nebengeräuschen auf das eigentliche, konstante Sprachmuster eines Wortes erreicht.

Gemäß einer Weiterbildung der Erfindung erfolgt bei unsicherer Erkennung eines Wortes eine erneute Eingabeaufforderung, die zum Nachtrainieren genutzt wird. Auch hier ist die maximale Zahl der Durchläufe frei einstellbar und jederzeit veränderbar. Wenn der Vergleich eines eingegebenen Sprachmusters mit abgelegten Sprachmustern eine ähnliche und wenig differenzierte Wahrscheinlichkeit der Erkennung für mehrere abgelegte Begriffe ergibt, werden dem Systembenutzer diese Begriffe vorgespielt und er wird aufgefordert, den anfangs eingegebenen Begriff nochmals zu sprechen. Bei dann erfolgreicher Erkennung wird das Nachtraining abgebrochen. Aus Gründen der Übersichtlichkeit wird bevorzugt, bei unsicherer Erkennung die Anzahl der vom System ausgegebenen in Frage kommenden Begriffe auf eine vorgegebene Anzahl zu begrenzen und die Wiederholung des Vorgangs auf z.B. drei unmittelbare Wiederholungen zu begrenzen.

Eine andere Weiterbildung sieht vor, daß bei einem Neueintrag eines Wortes bzw. Begriffs im System, nach Eingabe des neuen Begriffs, ein Vergleich mit bereits gespeicherten Begriffen erfolgt. Das Spracherkennungssystem wird also dazu genutzt, um einen neuen Begriff mit bereits abgelegten Begriffen zu vergleichen und festzustellen, ob sich das Sprachmuster des neuen Begriffs so weit von den Sprachmustern der bereits abgelegten Begriffe unterscheidet, daß keine Fehlerkennung bzw. unsichere Erkennung erwartet wird. Führt jedoch das neue Sprachmuster im Rahmen eines Korrelationsvergleichs nach einem festgelegten Kriterium einer unsicheren Erkennung zu einer starken Ähnlichkeit oder wahrscheinlichen Übereinstimmung mit bereits abgelegten Sprachmustern, so wird der Benutzer vom System optisch oder akustisch informiert und zu einer wiederholten Eingabe des neuen Begriffs aufgefordert, die dem Nachtrainieren dient. Die Anzahl der aufeinanderfolgenden Wiederholungen ist frei wählbar und jederzeit veränderbar.

Im folgenden wird die Erfindung anhand mehrerer Zeichnungsfiguren näher erläutert. Aus den Zeichnungsfiguren und der zugehörigen Beschreibung ergeben sich weitere Merkmale der Erfindung. Es zeigt:
Figur 1: schematisches Ablaufdiagramm des erfindungsgemäßen Verfahrens am Beispiel eines in einem Mobilfunkgerät eingesetzten Spracherkennungssystems;
Figur 2: schematisches Ablaufdiagramm des Verfahrens bei der Verarbeitung von Neueintragen.

Anhand der Zeichnungsfiguren wird das erfindungsgemäße Verfahren in Verbindung mit einem Mobilfunkgerät mit Spracherkennungsfunktion näher beschrieben. Es wird von einem Mobilfunkgerät mit Spracherkennung und Sprachausgabe ausgegangen. Das Mobilfunkgerät besitzt ein Telefonbuch mit Namenseinträgen denen jeweils eine entsprechende Rufnummer zugeordnet ist. Durch Spracheingabe eines im Telefonbuch abgelegten Namens kann der Benutzer einen Wahlvorgang oder eine andere Aktion auslösen.

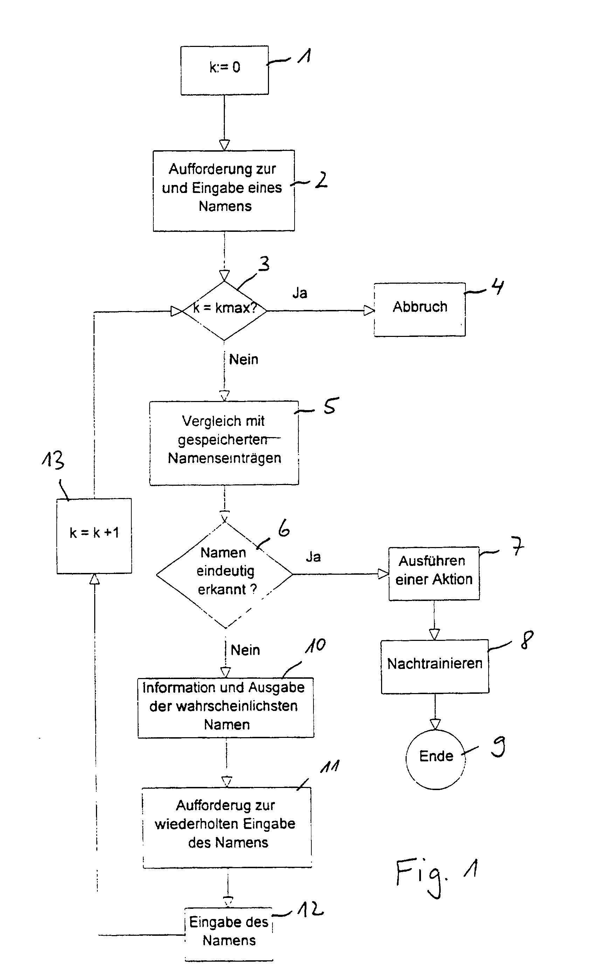

Gemäß Figur 1 wird nach erfolgreicher Erkennung eines bereits als Sprachmuster im Telefonbuch abgelegten Namens das abgelegte Sprachmuster mit dem neu aufgezeichneten nachtrainiert. Bei unsicherer Erkennung eines Namens erfolgt eine erneute Eingabeaufforderung, die zum Nachtrainieren genutzt wird.

Die anfangs in Schritt 1 festgesetzte Variable k bzw. kₘₐₓ beschreibt die Anzahl bzw. maximale Anzahl der Trainingsdurchläufe.
Nach Aufforderung zur und Eingabe des Namens, gemäß Schritt 2, erfolgt in Schritt 3 zunächst ein Vergleich, ob die maximale Anzahl der Nachtrainigsdurchläufe erreicht ist. Ist dies der Fall, wird gemäß Schritt 4 die Operation abgebrochen. Ist die maximale Anzahl der Durchläufe nicht erreicht, erfolgt durch das Spracherkennungssystem in Schritt 5 ein Vergleich des eingegebenen Namens mit den bereits im Telefonbuch gespeicherten Namen. Wird der eingegebene Namen gemäß Schritt 6 sicher erkannt, so wird die vom Benutzer gewünschte Aktion ausgeführt. Schritt 7, z.B. ein Verbindungsaufbau zum gewünschten Gesprächspartner. Weiters erfolgt in Schritt 8 ein Nachtrainieren des entsprechenden Telefonbucheintrags mit dem zuletzt eingegebenen, als richtig erkannten Namen. Die Aktion ist beendet, Schritt 9.

Wird der eingegebene Namen jedoch nicht sicher erkannt, und ergibt der Vergleich eines eingegebenen Sprachmusters mit abgelegten Sprachmustern gemäß Schritt 6 eine ähnliche und wenig differenzierte Wahrscheinlichkeit der Erkennung für mehrere abgelegte Namen, dann wird der Systemnutzer informiert und ihm werden die dem eingegebenen Namen ähnlichsten Namen vorgespielt, Schritt 10. Der Benutzer wird in Schritt 11 aufgefordert, den anfangs eingegebenen Namen nochmals zu sprechen, Schritt 12. Der Zähler k wird um eins erhöht, gemäß Schritt 13, und die Routine springt zurück zu Schritt 3 und wiederholt ab diesem Schritt.

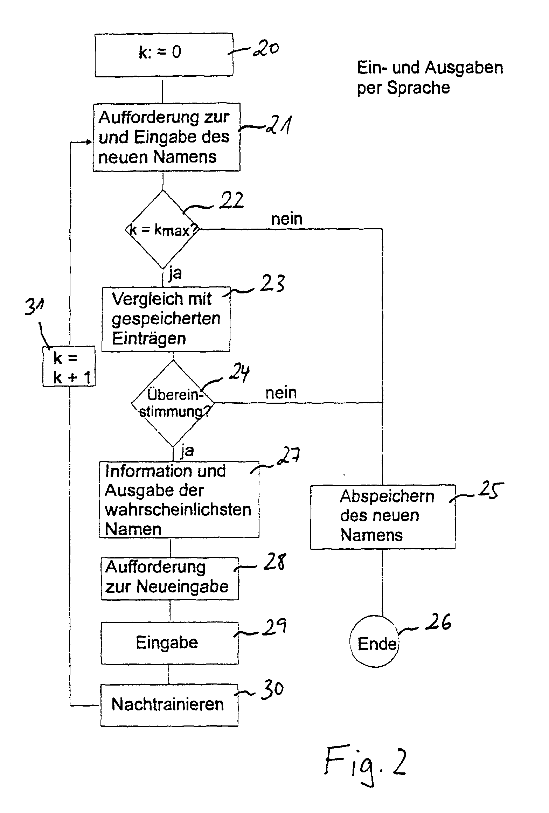

Gemäß Figur 2 erfolgt bei einem Neueintrag eines Namens in das Telefonbuch ein Vergleich mit den bereits gespeicherten Namen. Zunächst wird der Schleifenzähler k in Schritt 20 auf Null gesetzt.
Der Benutzer wird dann in Schritt 21 zur Eingabe des neuen Namens aufgefordert.
Dann wird in Schritt 22 überprüft, ob die Anzahl der Durchgänge den definierten Wert überschritten hat. Ist dies der Fall, wird der neue Namen gemäß Schritt 25 im Telefonbuch abgespeichert und das Verfahren beendet, Schritt 26.
Ist der Zähler kleiner als der vorgegebene Wert, so vergleicht das Spracherkennungssystem in Schritt 23 den neuen Namen mit bereits abgelegten Namen. Falls sich gemäß Schritt 24 das Sprachmuster des neuen Namens so weit von den Sprachmustern der bereits abgelegten Namen unterscheidet, daß keine Fehlerkennung bzw. unsichere Erkennung erwartet wird, so wird der neue Namen gemäß Schritt 25 im Telefonbuch abgespeichert und das Verfahren beendet, Schritt 26. Führt jedoch das neue Sprachmuster im Rahmen eines Korrelationsvergleichs nach dem festgelegten Kriterium einer unsicheren Erkennung zu einer starken Ahnlichkeit oder wahrscheinlichen Übereinstimmung mit bereits abgelegten Namen, so wird der Benutzer in Schritt 27 vom System optisch oder akustisch informiert und in Schritt 28 zu einer wiederholten Eingabe des neuen Namens aufgefordert. Der neue Namen kann nochmals eingegeben werden, Schritt 29. Die wiederholte Eingabe dient gemäß Schritt 30 dem Nachtrainieren. Die Anzahl der aufeinanderfolgenden Wiederholungen ist frei wählbar und jederzeit veränderbar. Nach jedem Durchlauf wird gemäß Schritt 31 der Zähler um eins erhöht, und die Routine springt zurück zu Schritt 21.

## Patentansprüche

1. Verfahren zur Erhöhung der Erkennungswahrscheinlichkeit von Spracherkennungssystemen, bei dem nach Eingabe eines zu erkennenden Begriffs ein Nachtrainieren des gleichlautenden bereits abgespeicherten Begriffs anhand des eingegebenen Begriffs erfolgt, **gekennzeichnet durch:**
a) Eingabe des zu erkennenden Begriffs;
b) Vergleich des eingegebenen Begriffs mit im Spracherkennungssystem bereits abgelegten Begriffen; und
c) falls der Begriff eindeutig erkannt wurde:
c.1) Ausführen einer gewünschten Aktion,
c.2) Nachtrainieren des entsprechenden im Spracherkennungssystems gespeicherten Begriffs mit dem anfangs eingegebenen Begriff, und
c.3) Beenden des Verfahrens;
d) falls der Vergleich eine ähnliche und wenig differenzierte Wahrscheinlichkeit der Erkennung für mehrere abgelegte Begriffe ergibt:
d.1) Information des Systembenutzers und Anzeigen oder Vorspielen dieser zum eingegeben Begriff ähnlichen Begriffe,
d.2) Aufforderung des Systembenutzers zur nochmaligen Eingabe des anfangs eingegebenen Begriffs,
e) Fortfahren mit Verfahrensschritt b).

2. Verfahren nach Anspruch 1, **dadurch gekennzeichnet, daß** das Nachtrainieren auf einem Vergleich durch Korrelation des eingegebenen Begriffs mit dem gleichlautenden, bereits abgespeicherten Begriffs basiert, wobei die jeweils charakteristischen Sprachmuster ermittelt und abgespeichert werden.

3. Verfahren nach Anspruch 1, **dadurch gekennzeichnet, daß** die Anzahl der angezeigten/vorgespielten Begriffe beliebig vorwählbar ist.

4. Verfahren nach einem der vorhergehenden Ansprüche, **dadurch gekennzeichnet, daß** bei einem Neueintrag eines Begriffs im Spracherkennungssystem, nach Eingabe des neuen Begriffs, ein Vergleich mit bereits gespeicherten Begriffen erfolgt, um festzustellen, ob sich das Sprachmuster des neuen Begriffs so weit von den Sprachmustern der bereits abgelegten Begriffe unterscheidet, daß keine Fehlerkennung bzw. unsichere Erkennung erwartet wird.

5. Verfahren nach einem der vorhergehenden Ansprüche, **dadurch gekennzeichnet, daß** wenn der neue Begriff im Rahmen eines Korrelationsvergleichs nach einem festgelegten Kriterium zu einer unsicheren Erkennung oder zu einer starken Ähnlichkeit oder wahrscheinlichen Übereinstimmung mit bereits abgelegten Begriffen führt, der Benutzer vom System optisch oder akustisch informiert und zu einer wiederholten Eingabe des neuen Begriffs aufgefordert wird, die dem Nachtrainieren dient.

6. Verfahren nach einem der vorhergehenden Ansprüche, **dadurch gekennzeichnet, daß** die Anzahl der Durchläufe des Nachtrainings beliebig einstellbar sind.

## Claims

1. Method for increasing the probability of recognition in speech recognition systems, wherein after input of a word to be recognized, a retraining of the previously stored similar sounding word is performed with the aid of the input word, **characterized by:**
a) input of the word to be recognized;
b) comparison of the input word with words already filed in the speech recognition system; and
c) if the word has been unambiguously recognized:
c.1) execution of a desired action,
c.2) retraining of the corresponding word stored in the speech recognition system with the word initially input, and
c.3) termination of the procedure;
d) if the comparison yields a similar and little-differentiated probability of recognition for several filed words:
d.1) informing of system user and display or playback of these words resembling the input word,
d.2) request to system user to repeat input of the word initially input,
e) continuation with method step b).

2. Method according to Claim 1, **characterized in that** the retraining is based on a comparison by correlation of the input word with the previously stored similar sounding word, the characteristic speech patterns being determined and stored on each occasion.

3. Method according to Claim 1, **characterized in that** any desired number of words to be displayed or played back may be preselected.

4. Method according to any one of the preceding claims, **characterized in that** upon a new entry of a word in the speech recognition system, after input of the new word, a comparison is made with previously stored words in order to determine whether the speech pattern of the new word is so dissimilar to the speech patterns of the previously filed words that a misrecognition or dubious recognition is improbable.

5. Method according to any one of the preceding claims, **characterized in that** if in a correlation comparison according to a specified criterion the new word leads to a dubious recognition or to a strong similarity to or probable sameness as previously filed words, the user of the system is visually or audibly informed and requested to repeat the input of the new word serving for the retraining.

6. Method according to any one of the preceding claims, **characterized in that** any desired number of iterations of the retraining may be set.

## Revendications

1. Procédé pour augmenter la probabilité de reconnaissance dans des systèmes de reconnaissance vocale, selon lequel, après l'entrée d'un mot à reconnaître, une adaptation du mot homophone déjà mis en mémoire a lieu à l'aide du mot entré, **caractérisé par** :
a) l'entrée du mot à reconnaître ;
b) la comparaison du mot entré avec des mots déjà mis en mémoire dans le système de reconnaissance vocale ; et
c) au cas où le mot a été reconnu clairement :
c.1) l'exécution d'une action souhaitée;
c.2) l'adaptation du mot correspondant mis en mémoire dans le système de reconnaissance vocale avec le mot entré au début, et
c.3) la fin du procédé ;
d) au cas où la comparaison donne une probabilité de reconnaissance semblable et peu différenciée pour plusieurs mots mis en mémoire :
d.1) l'information de l'utilisateur du système et l'affichage ou la reproduction acoustique de ces mots semblables au mot entré,
d.2) l'invitation de l'utilisateur du système à entrer une nouvelle fois le mot entré au début,
e) la poursuite avec l'étape b).

2. Procédé selon la revendication 1, **caractérisé en ce que** l'adaptation est basée sur une comparaison par corrélation du mot entré avec le mot homophone déjà mis en mémoire, les modèles vocaux caractéristiques étant déterminés et mis en mémoire.

3. Procédé selon la revendication 1, **caractérisé en ce qu'**on peut choisir un nombre quelconque de mots affichés/reproduits acoustiquement.

4. Procédé selon l'une des revendications précédentes, **caractérisé en ce que** dans le cas d'une nouvelle inscription d'un mot dans le système de reconnaissance vocale, après l'entrée du nouveau mot, une comparaison a lieu avec les mots déjà mis en mémoire, pour déterminer si le modèle vocal du nouveau mot est différent des modèles vocaux des mots déjà mis en mémoire au point qu'on ne peut pas s'attendre à une mauvaise reconnaissance ou à une reconnaissance incertaine.

5. Procédé selon l'une des revendications précédentes, **caractérisé en ce que** si le nouveau mot, dans le cadre d'une comparaison par corrélation en fonction d'un critère défini, entraîne une reconnaissance incertaine ou une forte similitude ou une concordance probable avec des mots déjà mis en mémoire, l'utilisateur est informé par le système par voie optique ou acoustique, et est invité à entrer une nouvelle fois le nouveau mot, ce qui sert à l'adaptation.

6. Procédé selon l'une des revendications précédentes, **caractérisé en ce qu'**on peut régler un nombre quelconque de passages d'adaptation.
